(19) Europäisches Patentamt
European Patent Office
Office européen des brevets

(11) **EP 3 214 398 B1**

(12) **FASCICULE DE BREVET EUROPEEN**

(45) Date de publication et mention de la délivrance du brevet:
**14.11.2018 Bulletin 2018/46**

(21) Numéro de dépôt: **17158921.1**

(22) Date de dépôt: **02.03.2017**

(51) Int Cl.:
*F28D 20/02* (2006.01)   *C09K 5/06* (2006.01)
*C09K 5/10* (2006.01)   *F24H 3/00* (2006.01)
*F24H 6/00* (2006.01)   *F24H 7/04* (2006.01)
*F24H 9/20* (2006.01)   *F28F 13/10* (2006.01)
*F28F 21/08* (2006.01)   *F28F 23/00* (2006.01)

(54) **DISPOSITIF DE STOCKAGE D'ÉNERGIE PAR MATÉRIAU À CHANGEMENT DE PHASE INCLUANT UNE CHARGE ÉLECTRIQUE INTÉGRÉE DANS LE CIRCUIT DU FLUIDE CALOPORTEUR**

EINRICHTUNG ZUR ENERGIESPEICHERUNG MIT PHASENWECHSELMATERIAL EINSCHLIESSLICH ELEKTRISCHE LADUNG INTEGRIERT IN DEM FLÜSSIGKEITSKREISLAUF

ENERGY STORAGE DEVICE BY PHASE CHANGE MATERIAL INCLUDING AN ELECTRICAL LOAD INTEGRATED IN THE FLUID CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2016 FR 1651859**

(43) Date de publication de la demande:
**06.09.2017 Bulletin 2017/36**

(73) Titulaire: **Commissariat à l'Energie Atomique et aux Energies Alternatives**
**75015 Paris (FR)**

(72) Inventeurs:
• **REVIL-BAUDARD, Léo**
**38950 SAINT-MARTIN- LE -VINOUX (FR)**

• **BENTIVOGLIO, Fabrice**
**38210 CRAS (FR)**
• **COUTURIER, Raphaël**
**38360 SASSENAGE (FR)**
• **NIVELON, Pierre**
**38660 SAINT HILARE DU TOUVET (FR)**
• **CHAZELLE, Benjamin**
**69440 MORNANT (FR)**
• **ROUGE, Sylvie**
**38320 BRIE ET ANGONNES (FR)**

(74) Mandataire: **Brizio Delaporte, Allison**
**Cabinet Hautier**
**20, rue de la Liberté**
**06000 Nice (FR)**

(56) Documents cités:
**WO-A1-2015/189450   FR-A1- 2 560 362**
**US-A- 6 047 106   US-A1- 2011 083 459**

## Description

DOMAINE TECHNIQUE

La présente invention porte sur un dispositif de stockage d'énergie par matériau à changement de phase selon la revendication 1 et un procédé de stockage associé, selon la revendication 15.

Ainsi, le domaine de l'invention concerne les Systèmes de Stockage Thermiques (SST) par Matériaux à Changement de Phase (MCP), et plus particulièrement, l'intégration d'un système permettant la flexibilité de l'énergie stockée.

Parmi ces systèmes, la présente invention trouve pour application avantageuse les SST par MCP de type tubes et calandre.

L'invention trouvera par exemple son application dans les réseaux de chaleur urbains, ruraux ou industriels ainsi que dans le stockage de l'énergie solaire et dans le stockage pour l'habitat. L'invention pourra également trouver des applications dans le développement des réseaux électriques et thermiques intelligents dits « smartgrid », ainsi que dans les interactions entre ces réseaux. L'invention pourra enfin trouver des applications dans le transport de la chaleur hors réseaux par l'intermédiaire de tout véhicule (exemples : camions, trains, bateau...).

ETAT DE LA TECHNIQUE

Les réseaux de chaleur sont constitués d'au moins une source de chaleur (centrale thermique, panneaux solaires thermiques, source géothermique,...), d'un réseau de fluide permettant le transport des calories aux usagers par l'intermédiaire d'un fluide caloporteur et éventuellement d'un réseau de retour. A chaque abonné correspond un échangeur de chaleur permettant le transfert thermique du circuit primaire (réseau relié à la source de chaleur) à un circuit secondaire. Ce second circuit est la propriété de l'abonné et est parcouru par de l'eau chaude (< 100°C).

La charge d'un réseau de chaleur est très fluctuante, en moyenne sur l'année les unités de production fonctionnent à 25% de leur capacité. Ce qui implique que les pics de consommation sont quatre fois plus importants que la charge moyenne. Ces pics (matin, soir) représentent environ 30% de la consommation thermique d'une journée de chauffe typique. Les générateurs d'appoint (et de secours) sont généralement des centrales thermiques au fioul lourd, au gaz naturel ou au charbon, polluantes et pas toujours bon marché. L'utilisation d'un système de stockage thermique qui emmagasinerait des calories pendant que la demande est basse et les réinjecterait sur le réseau pendant les pics de consommations pourrait pallier ce problème.

Le stockage thermique peut être réalisé par changement d'état caractérisé par une enthalpie de transformation. Dans ce cas, le stockage se fait par matériau à changement de phase. C'est l'enthalpie de changement de phase, le plus souvent lors du changement d'état solide/liquide, qui est stockée. Cette énergie, qui est absorbée lors de la fusion et libérée lors de la solidification, résulte de l'établissement, ou de la rupture, ou de la modification de liaisons intermoléculaires. La charge du système de stockage s'accompagne de la fusion du matériau de stockage, tandis que la décharge est réalisée par la solidification dudit matériau.

La quantité d'énergie thermique stockée s'exprime avec la relation suivante :

$$\Delta Q = m \cdot h\_lv$$

m Masse [kg]
h_lv Enthalpie massique de changement de phase solide-liquide [kJ/kg]

Un des avantages majeurs de cette technologie est que le changement de phase se fait à pression et température constantes. Par conséquent, la décharge de l'énergie stockée peut se faire à température quasiment constante et proche de la température de changement de phase.

L'enthalpie de changement de phase est relativement importante en comparaison de la variation d'énergie sensible d'un matériau. Par conséquent, les systèmes de stockage avec MCP sont intéressants car la quantité d'énergie stockée par unité de volume (et de masse) est supérieure à celle obtenue par un système sensible (meilleure densité de stockage). De ce fait les volumes de stockage et de matériaux sont réduits, ce qui diminue le prix du système, et limite les pertes thermiques qui sont proportionnelles à la surface extérieure du réservoir.

On connait notamment les technologies de macro-encapsulation du MCP, de stockage avec contact direct et d'échangeur tube et calandre.

La macro-encapsulation du MCP consiste à placer dans un réservoir des modules étanches comprenant un MCP. Ces modules sont plongés dans un fluide caloporteur qui s'écoule le long des modules. Le fluide caloporteur et le MCP vont échanger de la chaleur. Le fluide caloporteur va en céder au MCP pendant la charge, ce qui entrainera la fusion de ce dernier. Le MCP va céder de la chaleur au fluide caloporteur pendant la décharge, ce qui entrainera la solidification de ce premier.

Le stockage thermique par changement de phase d'un matériau est dit « à contact direct » si le MCP est en contact direct avec le fluide caloporteur.

A titre d'exemple, pendant la charge, de l'huile chaude arrive par un tube d'alimentation et cède de l'énergie au MCP, entrainant la fonte de celui-ci. Ayant une densité plus faible que le MCP, l'huile remonte dans la partie haute du réservoir où elle est pompée pour retourner dans l'échangeur où elle est réchauffée. Au cours de la décharge, l'huile froide arrive par le tube d'alimentation, elle monte en température en échangeant de l'énergie avec le MCP qui se solidifie, puis remonte dans la partie haute du réservoir où elle est de nouveau pompée ; dans l'échangeur, l'huile cède de la chaleur à un fluide secondaire.

La technologie d'échangeur dit à tube et calandre est bien connue : une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique cette technologie est adaptée, il n'y a plus échange entre deux fluides en mouvement, mais entre un fluide caloporteur qui circule dans les tubes et le MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

L'objectif principal de ce type de réservoir de stockage est de stocker une grande quantité d'énergie dans un petit volume d'une part, tout en garantissant d'autre part des temps de charge et décharge relativement courts, typiquement de quelques heures. Les deux grandeurs à optimiser sont respectivement la densité de stockage et la puissance thermique. Hors l'amélioration de la densité de stockage se fait bien souvent au détriment de la puissance thermique et inversement.

Le stockage thermique s'est récemment développé autour des centrales solaires thermodynamiques afin de pallier l'intermittence de la ressource solaire. Aujourd'hui, la thématique du stockage thermique concerne également l'habitat et les réseaux de chaleur.

Par ailleurs, des solutions proposent d'ajouter une charge électrique, en plus de la charge thermique, afin de profiter du prix attractif de l'électricité lors des périodes de surproduction électrique. Hors, avec l'augmentation de la part d'énergie renouvelable sur les réseaux électriques, les périodes de surproduction électrique sont en hausse. La demande de brevet US20110083459 décrit un dispositif de stockage d'énergie thermique selon le préambule de la revendication 1, dans lequel une charge électrique est responsable du changement d'état du MCP. Plus précisément, ce document décrit un dispositif de stockage thermique par enthalpie de changement de phase pour réseau de chaleur. Des modules cylindriques de MCP encapsulés sont positionnés verticalement dans le réservoir de stockage et baignent dans de l'huile thermique. Deux résistances électriques sont disposées en haut et en bas du réservoir et servent d'éléments chauffants. Ce système de stockage se charge avec l'électricité et se décharge sous forme thermique. Avec cette solution il existe un risque significatif que l'huile chauffée entraîne la fusion du MCP dans la partie basse des modules. Or beaucoup de MCP présentent une forte variation volumique lors de leur changement de phase, une charge non contrôlée dans laquelle le liquide ne peut pas s'expandre présente ainsi un fort risque de rupture mécanique du fait des contraintes engendrées.

Par ailleurs, le réservoir ne peut être chargé qu'avec de l'énergie électrique, ce qui ne présente que peu d'intérêt dans le domaine des réseaux de chaleur où les surplus d'énergie thermique doivent aussi pouvoir être stockés.

Il existe donc le besoin de proposer un dispositif permettant d'associer une charge électrique et une charge thermique tout en présentant une densité de stockage et une puissance thermique satisfaisantes.

RÉSUMÉ DE L'INVENTION

La présente invention propose à cet effet un dispositif de stockage d'énergie par matériau à changement de phase comprenant une enceinte et un matériau à changement de phase destiné à être contenu dans ladite enceinte et une source de chaleur thermique comprenant un fluide caloporteur traversant ladite enceinte pour apporter et extraire de la chaleur audit MCP. Le dispositif comprend aussi une source d'énergie électrique permettant d'apporter de la chaleur audit MCP.

La source de chaleur électrique permet de générer de la chaleur transmise au MCP qui stocke l'énergie thermique d'origine électrique par effet Joule. En parallèle, le stockage de l'énergie thermique se fait par le fluide caloporteur qui la transmet au MCP. Avantageusement, la récupération de l'énergie thermique issue indifféremment de l'énergie électrique ou de l'énergie thermique est réalisée par le fluide caloporteur sous forme de chaleur.

Le dispositif de stockage selon l'invention comprend un dispositif de régulation de la température du fluide caloporteur. Le dispositif de régulation permet de contrôler la température du fluide caloporteur lors de l'utilisation du système de chauffe électrique, afin d'éviter un surchauffe du fluide caloporteur, du MCP, ou des systèmes de chauffe électrique eux-mêmes.

Avantageusement, le dispositif est de type tubes et calandre.

L'invention intègre au moins un élément de restriction de section inséré à l'intérieur des zones de circulation du fluide caloporteur. Au moins certains de ces éléments de restrictions comprennent au moins un élément chauffant alimenté en électricité. Ces éléments chauffants sont formés ou sont portés par l'au moins un élément de restriction de section et sont configurés pour chauffer au moins en partie l'au moins un élément de restriction de section.

Ces éléments de restriction associés à des éléments chauffants permettent, une restriction de la section de passage du fluide caloporteur et donc une amélioration des transferts thermiques grâce à une vitesse de fluide plus importante pour un même débit et/ ou un diamètre hydraulique plus faible. Les éléments chauffants associés aux éléments de restriction assurent l'homogénéisation de la chauffe électrique.

L'invention contribue de manière avantageuse à fournir une amélioration des transferts thermiques grâce à une augmentation de la vitesse du fluide caloporteur pour un même débit, sans pour autant modifier la densité de stockage du système complet.

L'invention contribue également à une utilisation efficace de l'énergie électrique produite lors des périodes de surproduction électrique.

Ainsi l'invention permet d'associer une charge électrique et une charge thermique tout en présentant une densité de stockage et une puissance thermique très satisfaisantes.

L'invention peut avoir plusieurs fonctionnements, à titre d'exemple les régimes possibles sont le régime de charge en circuit fermé, alors intégralement électrique; ainsi que les régimes de charge en circuit ouvert, correspondant à la charge thermique, la décharge thermique, les charges thermiques et électriques simultanées, et la décharge thermique avec un appoint électrique. Dans ces deux derniers cas, la puissance électrique pourra aller selon les régimes et le lieu d'implantation des charges électriques soit directement vers l'application (la charge électrique est par exemple réalisée dans le collecteur supérieur), soit partiellement vers l'application et partiellement vers le MCP (la charge électrique est par exemple réalisée le long des éléments de restriction de section). Un autre régime peut être envisagé dans le cas des charges électriques le long des restrictions de section correspondant à la charge électrique sans débit de fluide.

Par ailleurs, les éléments de restrictions améliorent l'échange thermique sans modifier la densité de stockage du système complet.

De plus, contrairement à un système de type macro-encapsulation, le volume consacré au fluide caloporteur dans un système tubes et calandre est diminué en faveur du volume destiné à stocker le MCP, favorisant la densité de stockage du MCP. Le MCP n'étant pas encapsulé, le système est moins soumis aux sollicitations mécaniques dues aux variations de masse volumique lors des changements de phase. Par ailleurs, le système avec encapsulation du MCP présenté dans la demande de brevet US20110083459 ne permet pas de conduire efficacement la chaleur jusqu'au coeur du matériau. En effet, les MCP présentent bien souvent une conductivité thermique très faible (< 1W/mK) pour les gammes de température considérées.

Dans le domaine des réseaux de chaleur, l'eau, qui est le fluide caloporteur le plus répandu, circule à des pressions supérieures à 4 bars. L'utilisation d'un système de type macro-encapsulation obligerait à dimensionner la calandre contenant l'eau en conséquence, ce qui est plus contraignant que lorsque le fluide caloporteur circule dans des tubes et que la calandre est à la pression atmosphérique.

D'autre part, l'invention présente également comme avantage de pouvoir être chargée à la fois avec de l'énergie électrique et à la fois thermique, permettant de profiter du prix attractif de l'électricité lors d'une surproduction électrique.

Enfin, l'intégration d'élément de restriction comprenant un élément chauffant améliore l'échange thermique de par l'augmentation de la vitesse de passage du fluide caloporteur et/ou la diminution du diamètre hydraulique de passage du fluide.

La présence d'un élément chauffant le long de l'élément de restriction, et l'orientation de l'élément chauffant selon une direction identique à celle du flux du liquide caloporteur, typiquement selon une direction verticale, permet un meilleur contrôle de la chauffe, empêchant une stratification thermique dans le haut du réservoir du fluide caloporteur pendant le régime de fonctionnement sans débit de fluide caloporteur, notamment lorsque le fluide est de l'huile et que les éléments chauffants se trouvent dans le distributeur et/ou collecteur supérieur comme dans la demande de brevet US20110083459. De plus ceci permet de diminuer les risques de rupture mécanique dus à une charge par le bas lors des variations volumiques des changements de phase, notamment lorsque le fluide est de l'huile et que les éléments chauffants se trouvent dans le distributeur et/ou collecteur inférieur comme dans la demande de brevet US20110083459. Dans le cadre de cette invention, le régime de chargement électrique avec fluide caloporteur en mouvement permet aussi de résoudre ces deux problèmes.

Préférentiellement, la source de chaleur électrique correspond à l'utilisation d'une ou plusieurs résistances électriques.

Avantageusement, le dispositif comprend des volumes de rétention de MCP et des zones de circulation d'un fluide caloporteur traversant le volume de rétention. Préférentiellement, les zones de circulation forment des conduits ou des tubes, traversant le ou les volumes de rétention de MCP, et dans lesquels circule le fluide caloporteur.

Avantageusement, ces tubes comportent une restriction de la section de passage du fluide caloporteur, ces restrictions pouvant correspondre par exemple à l'insertion d'une résistance mono-tubulaire ou à l'insertion de sections creuses remplies de MCP.

Suivant un autre objet, la présente invention concerne un procédé de stockage d'énergie comprenant une phase de stockage d'énergie thermique et/ou électrique et une phase de déstockage. Le procédé permet avantageusement un stockage de chaleur à partir d'énergie thermique et d'énergie électrique simultanément sans interférence néfaste, tout en améliorant les échanges thermiques grâce à une augmentation de la vitesse du fluide caloporteur pour un même débit.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement dans lesquelles :

- Figure 1 : vue en coupe verticale d'un dispositif selon un premier mode de réalisation de l'invention ;
- Figure 2 : vue en coupe en détail d'une zone de circulation du fluide caloporteur traversant le volume de rétention du MCP dans un dispositif illustré en figure 1 ;
- Figure 3 : vue du dessus d'une coupe horizontale de la zone de circulation du fluide illustrée en figure 2 ;
- Figure 4 : vue d'un exemple de résistance monotubulaire entourée d'un fil métallique ;
- Figure 5a : vue en coupe horizontale d'un dispositif selon le premier mode de réalisation de l'invention illustré en figure 1 ;
- Figure 5b : vue en coupe en détail d'une zone de circulation du fluide caloporteur dans un dispositif illustré dans la figure 5a ;
- Figure 6 : vue en coupe verticale d'un dispositif selon un second mode de réalisation de l'invention ;
- Figure 7 : vue en coupe verticale d'un dispositif selon un troisième mode de réalisation de l'invention ;
- Figure 8 : vue en coupe en détail d'une zone de circulation du fluide caloporteur du dispositif illustré en figure 7.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs, longueurs et diamètres relatifs des différentes pièces ne sont pas représentatifs de la réalité.

## EXPOSE DETAILLE DE MODES DE REALISATION PARTICULIERS

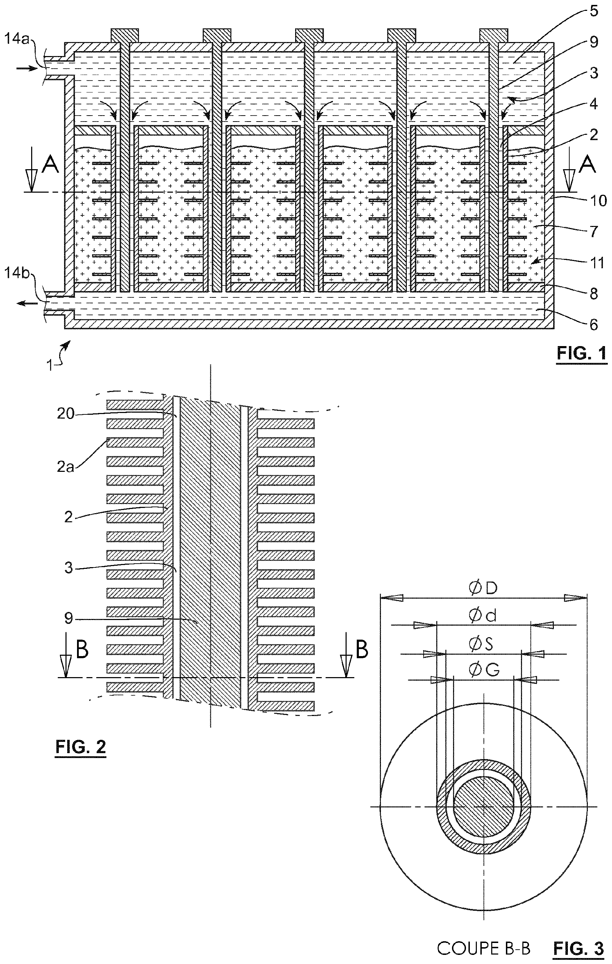

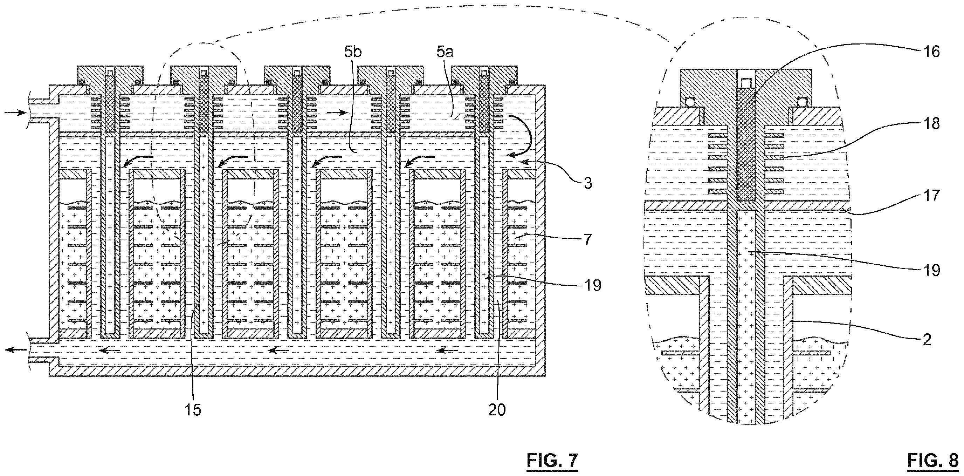

Avant d'entamer une revue détaillée de modes de réalisation de l'invention, sont énoncées ci-après des caractéristiques optionnelles qui peuvent éventuellement être utilisées en association ou alternativement.
On rappelle tout d'abord que l'invention porte sur un dispositif de stockage d'énergie thermique par matériau à changement de phase (MCP) comprenant une enceinte de stockage comprenant : un volume de rétention comprenant au moins un MCP et des zones de circulation traversant le MCP et destinées à contenir un fluide caloporteur pour le faire circuler dans le volume de rétention comprenant le MCP, caractérisé en ce que qu'il comprend des éléments de restriction de section agencés au moins partiellement à l'intérieur d'au moins certaines zones de circulation du fluide caloporteur de sorte à réduire la section de passage du fluide caloporteur dans au moins une partie des zones de circulation, au moins un élément de restriction de section comprenant au moins un élément chauffant alimenté en électricité et configuré pour chauffer au moins en partie l'élément de restriction de section.
Avantageusement, le ratio entre la section de l'élément de restriction et la section des zones de circulation est supérieur à 20 %, éventuellement supérieur à 50%, voire supérieur à 75%. De préférence ce ratio est compris entre 50 % et 90 %.
Le ratio est défini comme la section de la restriction sur la section de passage sans restriction, soit $r = G^2/S^2$ (voir figure 3). Ces ratios entrainent des augmentations de vitesse, sans effet de tourbillonnement (effet Swirl), de 25% à 900%.
Par exemple dans le cadre d'un tube présentant un diamètre de 40 mm, l'espace annulaire présentera au minimum une épaisseur de circulation de 1 mm, soit un ratio de 90 %. Dans un mode de réalisation préféré, le diamètre du tube est de 20 mm et l'épaisseur de circulation est de 2 mm, soit un ratio de 64 %.
Avantageusement, les zones de circulation s'étendent principalement selon une direction longitudinale et les éléments de restriction de section s'étendent sur toute la dimension longitudinale des zones de circulation du fluide caloporteur situées au regard du volume de rétention du MCP.
De préférence les zones de circulation sont rectilignes et s'étendent longitudinalement. Dans les modes de réalisation illustrés en figures 1, 6, 7, 8, la dimension longitudinale correspond à une dimension verticale lors d'une utilisation normale du dispositif.
Avantageusement, l'enceinte comprend une région de distribution du fluide caloporteur vers les zones de circulation et une région de collecte du fluide caloporteur provenant des zones de circulation, la région de distribution et la région de collecte étant agencées de manière opposée de part et d'autre des zones de circulation du fluide caloporteur.
Avantageusement, les éléments de restriction de section s'étendent dans la région de distribution du fluide caloporteur.
Avantageusement, l'élément chauffant du moyen de restriction est agencé en partie au moins au niveau de la région de distribution.
Selon un mode de réalisation, l'élément chauffant est situé en dehors de la zone de circulation située au regard du MCP. L'alimentation électrique des barreaux chauffants peut ainsi se faire depuis l'extérieur du stockage, facilitant la distribution électrique.
Avantageusement, au moins un élément de restriction est creux. Au moins un MCP additionnel est disposé dans le creux dudit élément de restriction et l'élément chauffant est disposé dans le creux de l'élément de restriction et au contact du MCP additionnel.
Avantageusement, ledit élément chauffant est une cartouche chauffante.

Avantageusement, la région de distribution comprend une réduction de section du passage du fluide caloporteur au niveau de l'élément chauffant.

Avantageusement, la réduction de section est une chicane.

Avantageusement, l'élément de restriction s'étend principalement selon une direction longitudinale, et l'élément chauffant s'étend sur une portion seulement de la dimension longitudinale de l'élément de restriction située au regard du MCP.

Dans un mode de réalisation particulier, l'élément de restriction dans l'une de ses portions ne comprend pas l'élément chauffant mais comprend un MCP additionnel. Cet ajout d'un MCP permet d'augmenter la quantité totale de MCP dans le système et de favoriser le stockage de chaleur.

Avantageusement, l'élément de restriction s'étend principalement selon une direction longitudinale, et l'élément chauffant s'étend sur toute la dimension longitudinale de l'élément de restriction située au regard du MCP.

Avantageusement, l'élément de restriction comprend un barreau chauffant.

Préférentiellement ledit barreau est un barreau thermiquement conducteur disposé au contact d'une résistance chauffante, qui est soit insérée dans le barreau, soit qui est placée sur sa face externe.

Avantageusement, tous les éléments de restriction de section comprennent un élément chauffant.

Avantageusement, les zones de circulation du fluide caloporteur comprennent des tubes creux permettant le passage du fluide caloporteur.

Avantageusement, les tubes comprennent des ailettes plongeant dans le MCP principal.

La présence d'ailettes permettant d'augmenter la surface d'échange et favorisant donc les transferts thermiques.

De préférence les ailettes sont en matériaux conducteurs.

De préférence les ailettes sont en aluminium et plus généralement en métal conduisant bien la chaleur, comme par exemple l'acier.

Préférentiellement, chaque tube comprend une première extrémité débouchant dans la région de distribution et une deuxième extrémité débouchant dans la région de collecte.

Avantageusement, les tubes s'étendent parallèlement les uns aux autres.

Avantageusement, les tubes s'étendent suivant la verticale.

Avantageusement, un fil métallique est enroulé hélicoïdalement autour de l'élément de restriction.

Avantageusement, le dispositif comprend au moins un élément intermédiaire situé entre une face interne d'au moins une zone de circulation du fluide caloporteur et une face externe de l'élément de restriction de section.

Avantageusement, l'élément intermédiaire est conformé pour réaliser un centrage de l'élément de restriction de section à l'intérieur de la zone de circulation.

Avantageusement, cet organe permet de guider l'élément de restriction de section lors de son insertion dans la zone de circulation du fluide, typiquement un tube.

Avantageusement, l'élément intermédiaire est conformé pour augmenter l'échange de chaleur par convection lors de l'écoulement de ce dernier entre la face interne de la zone de circulation du fluide et la face externe de l'élément de restriction de section.

Avantageusement, l'élément intermédiaire est conformé pour guider le fluide caloporteur lors de l'écoulement de ce dernier entre la face interne de la zone de circulation du fluide et la face externe de l'élément de restriction de section.

Selon un mode de réalisation avantageux ce guidage est hélicoïdal. Ainsi le fluide caloporteur tourne autour de l'élément de restriction lors de son écoulement dans la zone de circulation. Cela permet d'augmenter les échanges thermiques entre le fluide caloporteur et l'élément de restriction. Par ailleurs, cela permet d'éviter un écoulement laminaire du fluide caloporteur à l'intérieur de la zone de circulation.

Avantageusement, l'élément intermédiaire est porté ou formé par la face externe de l'élément de restriction de section. Ce mode de réalisation a pour avantage de faciliter la réalisation de l'organe de centrage. Selon une alternative, l'organe de centrage est porté ou formé par la face interne la zone de circulation du fluide, typiquement un tube.

Avantageusement, l'élément intermédiaire présente une forme hélicoïdale.

Avantageusement, l'élément est formé par un fil enroulé autour de la face externe de l'élément de restriction de section. Ce mode de réalisation est simple et peu couteux à réaliser. De préférence le fil est soudé ou brasé sur l'élément de restriction formant un tube ou un barreau.

Avantageusement, le fil est un fil résistif.

Le fil est alors isolé électriquement du fluide caloporteur et de préférence de l'élément de restriction. Le système de fixation du fil sur l'élément de restriction est avantageusement réalisé par l'intermédiaire d'une colle ou de colliers de serrage. A titre d'exemple, en prenant un fil résistif, de diamètre 1.35 mm et de résistance 3.6 $\Omega$/m, enroulé selon un pas de 10 mm autour d'une restriction de section de 16 mm de diamètre et de 4 m de long, on obtient une puissance de 720 W (à 230 V) et une température de fil estimée ne dépassant pas les 200°C pour un fluide caloporteur à 100°C. Le prix du dispositif est avantageux, cependant, dans ces conditions, le fil résistif n'est pas un optimum pour servir de guide et de positionneur car l'isolant électrique est fragile et la liaison fil/barreau faible.

Avantageusement, on peut bobiner le fil plus ou moins densément suivant la position dans la hauteur du réservoir, ce qui apporte l'avantage de répartir la densité de flux en fonction des contraintes de fonte du MCP Par exemple on privilégiera une densité plus importante de l'enroulage vers le haut du réservoir où l'on souhaite initier la fonte du MCP.

Avantageusement, l'élément intermédiaire est formé par un filetage réalisé dans la face externe de l'élément de restriction de section.

Avantageusement, l'élément intermédiaire est formé d'une pluralité de demi-disques alternés s'étendant selon une direction sensiblement perpendiculaire à la direction principale selon laquelle l'élément de restriction s'étend. Dans ce mode de réalisation l'élément intermédiaire participe à la fois au centrage de l'élément de restriction de section et à la fois à l'augmentation de l'échange de chaleur par convection la mise en turbulence du fluide caloporteur. En revanche il ne guide pas ce dernier. Selon un mode de réalisation, on prévoit des disques ajourés ou des demi-disques alternés, ce qui permet un centrage de l'élément de restriction sans obstruer totalement la section de passage du fluide. Une hélice peut également être utilisée.

Avantageusement, les éléments de restrictions comprennent des moyens de coopération avec les zones de circulation.

Les moyens de coopération sont alors des guides formés sur les éléments de restriction complémentaires d'un guide formés dans les zones de passage, autorisant le passage d'un fluide.

A titre d'exemple, le tube comprend des rainures et les sections de passage des formes complémentaires à ces rainures. Ces rainures et leurs formes complémentaires définissent alors par exemple un passage hélicoïdal pour l'écoulement du fluide.

Avantageusement, l'élément chauffant comprend des ports d'alimentation électrique et les ports d'alimentation électrique sont situés à l'extérieur de l'enceinte.

Avantageusement, le fluide caloporteur est l'eau.

Avantageusement, les éléments de circulation comportent des ailettes.

Suivant un autre aspect, l'invention concerne un procédé de stockage et déstockage d'énergie thermique par un dispositif selon l'invention et comprend :

a- une phase de stockage d'énergie électrique dans laquelle l'élément chauffant et/ou le fluide caloporteur transmettent de la chaleur au MCP principal qui stocke l'énergie thermique en changeant d'état,
b- une phase de déstockage d'énergie thermique dans laquelle le fluide caloporteur refroidit le MCP qui change d'état pour libérer de l'énergie thermique qui est alors récupérée par le fluide caloporteur.

Un premier mode de réalisation de l'invention va maintenant être décrit en référence aux figures 1 à 4.

Le dispositif selon l'invention est un dispositif de stockage d'énergie par matériau à changement de phase (MCP).

Le dispositif comprend une enceinte de stockage 10 comprenant un ou plusieurs volumes de rétention 11 d'au moins un MCP 7. L'enceinte 10 est configurée pour recevoir un fluide caloporteur 3. Le fluide caloporteur 3 circule d'une embouchure d'entrée 14a vers une embouchure de sortie 14b. Les embouchures d'entrée 14a et de sortie 14b peuvent être inversées.

L'enceinte 10 est classiquement d'une forme cylindrique (de base circulaire ou polygonale) dont les parois sont formées de matériau métallique résistant aux variations de pression et de température. A titre d'exemple, l'enceinte 10 est en acier de construction au carbone. Les nuances classiques pour une enceinte 10 sous pression sont P235GH, P265GH, P355GH. En l'absence de pression, des aciers inoxydables 304, 316 peuvent être utilisés.

Selon le type de dispositif de stockage d'énergie thermique, différentes configurations sont possibles.

Le dispositif comprend au moins un volume de rétention 11, et possiblement une pluralité, destiné à contenir un MCP 7. Dans la suite de la description, il est utilisé sans être limitatif le singulier ou le pluriel pour les volumes de rétention 11.

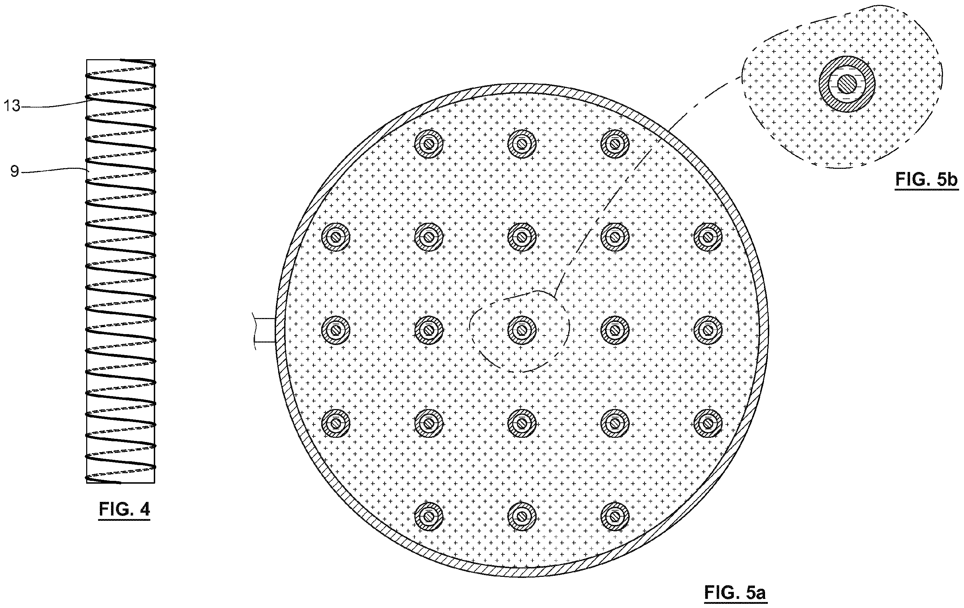

Comme cela apparaît aux figures 5a et 5b, sur l'exemple illustré l'enceinte de stockage 10 comprend un unique volume de rétention 11. Ainsi, le MCP 7 constitue un unique volume continu. Comme cela sera détaillé par la suite, le volume du MCP 7 est traversé par une pluralité de zones de circulation 4. Ce mode de réalisation facilite l'insertion du MCP 7 dans l'enceinte 10 et favorise l'homogénéité des transferts thermiques.

Selon un mode de réalisation alternatif non illustré, l'enceinte de stockage 10 comprend plusieurs volumes de rétention 11 distincts les uns des autres, c'est-à-dire entre lesquels le MCP ne communique pas.

Selon un mode de réalisation préféré, l'enceinte délimitant les volumes de rétention 11 comprend des parois intérieures classiquement métalliques. Les parois sont préférentiellement recouvertes d'un matériau de revêtement destiné à éviter le contact entre le au moins un MCP 7 et des parties métalliques. A titre d'exemple le matériau de revêtement est un polymère ou une résine, préférentiellement un matériau de type résine fluorée tel du PTFE, FEP ou PFA. Cette disposition améliore les capacités de stockage du MCP 7 en limitant l'oxydation du MCP 7 lors des cycles de stockage au contact de l'oxygène et/ou du métal. Avantageusement, cette disposition peut également être utile pour éviter la corrosion de l'enceinte délimitant les volumes de rétention 11 par le MCP 7 si celui-ci est corrosif.

Le MCP 7 est un matériau à deux phases, par exemple solide et liquide, dont le passage entre ces deux phases stocke ou libère de l'énergie. Préférentiellement, le passage d'une première phase à une deuxième nécessite un apport de chaleur qui est donc stocké dans le MCP 7 dans sa deuxième phase. Cette chaleur est dans l'invention, apportée par le fluide caloporteur et, alternativement ou simultanément par un élément chauffant électrique. Le fluide caloporteur est à haute température, c'est à dire à température plus haute que la température de changement de phase du MCP 7. A contrario, le passage de la deuxième phase à la première phase est exothermique et libère la chaleur stockée. Cette chaleur est alors récupérée par le fluide caloporteur qui est à basse température, c'est à dire plus basse que la température de changement de phase du MCP 7.

Le MCP 7 est préférentiellement choisi parmi les MCP qui ne s'oxydent pas et/ou qui n'oxydent pas la structure des volumes de rétention 11 et/ou qui présentent une bonne enthalpie volumique et/ou massique de changement de phase et/ou qui ne sont pas toxiques et/ou qui présentent une bonne stabilité au changement de phase. De préférence, le MCP 7 a une bonne capacité calorifique et une conductivité thermique la plus élevée possible, a une plage de fusion réduite, a une faible expansion volumique, ne présente pas de surfusion ni de fusion non congruente, est peu cher et disponible en grande quantité.

Dans la suite de la description, l'expression « MCP » n'est pas limitative. Le MCP peut être constitué d'un mélange de MCPs présentant des compositions différentes. Par ailleurs, différents MCP 7 peuvent être utilisés notamment les MCP à transition solide/solide ou préférentiellement les MCP à transition solide/liquide. L'invention est adaptée à une vaste variété de MCP 7 et donc à une large gamme de températures de stockage. Les deux grandes catégories de MCP 7 pouvant être utilisées sont les organiques (paraffine, acide gras, alcool,...) et les inorganiques (hydrates de sel, alliages métalliques,...). A titre d'exemple non limitatif, un MCP 7 qui peut être utilisé dans les modes de réalisation illustrés est le xylitol, préférentiellement associé à un dispositif ou à un additif limitant les problèmes de surfusion.

L'enceinte contient en plus du MCP 7 un ciel gazeux pour absorber les variations de volume de MCP lors des changements de phase.

Le dispositif de stockage comporte des zones de circulation 4 d'un fluide caloporteur 3, notamment des zones traversant les volumes de rétention 11.

Le fluide caloporteur 3 est préférentiellement de l'eau, mais peut également être tout autre fluide monophasique (ex : huile thermique), ou même un gaz (ex : air) ou un fluide diphasique (ex : eau en ébullition ou vapeur en condensation) ou un fluide monophasique de type métal liquide ou un sel fondu.

Le dispositif comprend des moyens de circulations du fluide caloporteur en entrée et sortie de l'enceinte 10. Ces moyens de circulation, typiquement des canalisations 14, comprennent avantageusement au moins une canalisation 14 constituant une première embouchure 14a ou embouchure d'entrée et au moins une canalisation 14 constituant une deuxième embouchure 14b ou embouchure de sortie. Ces deux embouchures 14a et 14b servent d'entrée ou de sortie du fluide caloporteur selon le sens de ce dernier, et peuvent être, selon les modes de réalisation, disposées à deux extrémités opposées de l'enceinte 10, par exemple l'entrée en haut et la sortie en bas, ou bien agencées d'un même côté par exemple avantageusement en haut. Ceci est particulièrement avantageux dans le cas où les zones de circulation du fluide traversent plusieurs fois le dispositif, typiquement un nombre paire de fois pour avoir première 14a et deuxième 14b embouchures d'un même côté de l'enceinte 10.

Suivant un mode de réalisation préféré, l'embouchure d'entrée 14a se situe en partie supérieure de l'enceinte 10 lors de l'étape de charge et en partie inférieure de l'enceinte 10 lors de l'étape de décharge. Avantageusement, l'embouchure de sortie 14b est agencée de manière opposée à l'embouchure d'entrée 14a, c'est à dire en partie inférieure lors de l'étape de charge et en partie supérieure lors de l'étape de décharge. Cette disposition optimise les transferts thermiques et la tenue mécanique de l'ensemble.

Préférentiellement, les zones de circulation du fluide caloporteur 3 à travers le volume de rétention 11 ont la forme de tubes 2.

Le volume de rétention est délimité dans sa partie inférieure par la plaque collectrice 8. La plaque collectrice permet le maintien mécanique du faisceau de tubes, tout en assurant à la fois la continuité hydraulique entre le collecteur/distributeur et les tubes, mais aussi l'étanchéité de ce circuit vis-à-vis de l'intérieur de la calandre. A titre d'exemple, les tubes peuvent être soudés, dudgeonnés, brasés à la plaque collectrice.

A titre préféré, ces tubes 2 comprennent avantageusement des inserts ou ailettes 2a telles qu'illustrées sur la figure 2. Le tube 2 et les ailettes 2a sont en matériau conducteur thermiquement tel qu'en métal par exemple en acier pour le tube 2 et en aluminium pour les ailettes 2a.

Le tube 2 peut être de diverses sections, à titre d'exemple circulaire tel qu'illustré sur les figures 1 à 3. Ce type de dispositif de stockage 1 présente l'avantage d'assurer efficacement les transferts thermiques entre le MCP 7 et le fluide caloporteur 3.

Les ailettes 2a peuvent aussi être orthogonales comme illustré en figures 1 à 3.

Selon des modes de réalisation alternatifs, elles peuvent être disposées hélicoïdalement autour d'au moins une partie du tube 2 ou être disposées de manière longitudinale le long d'au moins une partie des tubes 2.

A titre d'exemple non limitatif, les ailettes peuvent être en aluminium, en acier, en cuivre, en carbone, en polymère ou en tout autre matériau permettant une amélioration de l'échange.

A titre d'exemple non limitatif, les ailettes peuvent être continues, c'est à dire pleines, ou segmentées, par exemple en forme de flocons ou de toute autre forme géométrique permettant d'améliorer l'échange de chaleur par conduction.

A titre d'exemple non limitatif, les ailettes peuvent être remplacées par des mousses ou des structures poreuses d'amélioration de l'échange thermique.

On entend par partie supérieure, la zone située au-dessus, suivant un axe vertical, d'un plan médian horizontal de l'enceinte 10. La partie supérieure est préférentiellement le tiers supérieur respectivement de l'enceinte 10 ou du dispositif 1.

On entend par partie inférieure, la zone située en-dessous, suivant un axe vertical, d'un plan médian horizontal de l'enceinte 10. La partie inférieure est préférentiellement le tiers inférieur respectivement de l'enceinte 10 ou du dispositif 1.

Le dispositif de stockage comprend, dans sa partie supérieure un distributeur 5 en communication fluidique avec l'extrémité supérieur du tube 2, et un collecteur 6 en communication fluidique avec l'extrémité inférieure du tube 2.

Lorsque le dispositif de stockage d'énergie fonctionne pour stocker de l'énergie thermique, le dispositif 1 apporte de la chaleur dans le volume de rétention 11, il y a un échange de chaleur du fluide caloporteur 3 vers le MCP 7 au travers du dispositif. Cette chaleur va permettre la transformation du MCP 7 de la première phase à la deuxième phase qui stocke alors la chaleur issue du fluide caloporteur 3. Lorsque le dispositif fonctionne, pour restituer de l'énergie thermique, le dispositif refroidit le MCP 7, il y a un échange de chaleur du MCP 7 vers le fluide caloporteur 3, ce qui permet le passage de la deuxième phase à la première phase. Cette transformation est exothermique. La chaleur libérée est récupérée par le fluide caloporteur 3.

Le dispositif comprend selon l'invention une source de chaleur électrique.

Selon un premier mode de réalisation, des éléments chauffants telles que par exemple des résistances électriques mono-tubulaires 9, également appelées barreaux chauffants, sont insérées dans les tubes 2 dans lesquelles circulent le fluide caloporteur. Dans la suite de la description, les termes résistances électriques mono-tubulaires ou barreaux chauffants sont interchangeables. Préférentiellement, les barreaux chauffants 9 sont insérés sur toutes les longueurs des tubes 2.

Préférentiellement, les barreaux chauffants dépassent au-delà de l'enceinte de stockage 10 et l'alimentation des barreaux chauffants peut ainsi se faire depuis l'extérieur de l'enceinte de stockage 10. La distribution électrique est ainsi facilitée.

L'élément chauffant 9 situé à l'intérieur du tube 2 réduit la section de passage de ce dernier. Cette diminution de section entraine une augmentation de la vitesse du fluide caloporteur, à débit constant, ce qui améliore l'échange thermique. Ainsi les éléments chauffants 9 au moins au niveau de leur paroi en regard des zones de circulation 4 formées typiquement par les tubes traversant le MCP, forment des éléments de restriction de section. La face externe de l'élément de restriction de section et la paroi interne du tube 2 de la zone de circulation 4 présentent des sections de préférence circulaire. Ainsi le passage défini entre ces deux faces en regard forme dans ce cas un espace annulaire 20.

A titre d'exemple, comme mentionné dans la figure 3, les tubes 2 possèdent un diamètre extérieur «D» de 55 mm (10⁻³ mètres) en comptant les ailettes et un diamètre externe « d » de 25 mm au niveau d'une section sans ailette. Le diamètre « S » intérieur des tubes est de 20 mm. Les éléments de restriction de section tels que les barreaux chauffants 9, présentent un diamètre « G » de 16 mm.

Préférentiellement, l'élément chauffant 9, est centré dans le tube 2. Avantageusement, l'élément chauffant 9 est centré dans le tube 2 grâce à un organe de centrage tel qu'un fil métallique 13 situé entre une face externe de l'élément chauffant 9 et une face interne du tube 2. Ainsi l'épaisseur du fil est un peu inférieure à celle de l'espace annulaire 20.

Avantageusement, l'organe de centrage permet de centrer l'élément chauffant 9 et facilite ainsi sa mise en place dans le tube 2.

De préférence l'organe de centrage, de préférence un fil 13, est porté par l'élément chauffant 9 comme illustré en figure 4. Alternativement il est porté par la face interne du tube 2.

Avantageusement, le fil améliore l'échange convectif en forçant l'eau à tourner à l'intérieur de l'espace annulaire 20 et augmente ainsi l'efficacité du transfert thermique. A titre d'exemple, le fil annulaire 13 est enroulé hélicoïdalement autour de l'élément chauffant 9.

A titre d'exemple non limitatif, le fil 13 peut être soudé ou brasé directement sur l'élément chauffant, typiquement le barreau, ou encore formé dans le barreau par un procédé de filetage.

Ainsi de préférence le fil 13 assure à la fois une fonction de centrage et une fonction d'amélioration du transfert convectif. Ces deux fonctions peuvent être assurées par d'autres organes que le fil 13. Elles peuvent notamment être assurées par des ailettes parallèles entre elles et perpendiculaires à la direction principale du tube 2 ou encore une ailette hélicoïdale continue.

Alternativement seule l'une de ces deux fonctions est assurée : soit la fonction de centrage soit la fonction d'améliorateur du transfert convectif.

Selon une possibilité de ce mode de réalisation, chaque tube 2 comporte un élément chauffant inséré, et l'insertion de l'élément chauffant se fait sur la totalité de la hauteur du tube. Une telle disposition permet une réduction de section sur une plus grande longueur de tube. De plus, l'insertion de l'élément chauffant sur toute la longueur du tube permet un meilleur contrôle de la chauffe. La réduction de section, couplée à l'insertion de l'élément chauffant augmentent les capacités de transfert thermique.

Le fluide caloporteur pénètre alors au sein de l'enceinte 10 par la canalisation d'entrée 14a. Le fluide arrive ensuite dans le distributeur 5 et pénètre alors au sein des tubes 2. Le fluide caloporteur et les éléments chauffant 9 fournissent de la chaleur au MCP 7 ce qui permet sa transformation. Cet échange de chaleur est favorisé par la vitesse de passage du fluide caloporteur qui est augmentée par la diminution de la section des tubes 2. Le fluide caloporteur va ensuite sortir des tubes 2 et aller dans le collecteur 6 puis sortir de l'enceinte 10 par l'embouchure de sortie 14b.

Selon une autre possibilité de réalisation les éléments chauffants peuvent être insérés sur une partie uniquement de la longueur des tubes. Les tubes 2 sans élément chauffant pouvant être munis d'éléments de restriction de section tels que des barreaux non chauffants, par exemple de même forme que les barreaux chauffants 9, pour assurer la fonction d'amélioration de l'échange par réduction de la section de passage.

Selon un autre mode de réalisation, l'élément chauffant peut être inséré dans tout ou partie de la hauteur du tube. Il est possible de ne chauffer que le haut du stockage pour éviter les problèmes de pression consécutifs à une inclusion de poche liquide dans du solide. Dans ce cas, l'élément chauffant peut n'être inséré que jusqu'à une hauteur prédéfinie.

Selon un autre mode de réalisation, l'élément chauffant peut être présent sur toute la longueur du tube, pour assurer la fonction d'amélioration de l'échange, mais la chauffe électrique peut n'être effectuée que sur une hauteur prédéfinie. Comme indiqué ci-dessus, seul le haut du stockage est chauffé pour éviter les problèmes de pression consécutifs à une inclusion de poche liquide dans du solide.

Selon un autre mode de réalisation, l'élément chauffant peut être présent sur toute la longueur du tube, pour assurer la fonction d'amélioration de l'échange, mais la chauffe électrique peut n'être effectuée que sur une hauteur prédéfinie et le reste de l'élément chauffant rempli d'un MCP additionnel pour optimiser la densité totale de stockage de MCP et donc la densité de stockage énergétique.

Selon un autre mode réalisation, le fil annulaire 13 qui entoure le barreau chauffant peut être optimisé afin de permettre le passage du flux de chaleur entre le barreau chauffant et le MCP lors des charges électriques par conduction, sans avoir besoin de débit de fluide caloporteur.

Une charge électrique pure sans obligation de fonctionnement en circuit fermé est possible. Deux modes de réalisation sont alors possibles :
Selon un premier mode de réalisation correspondant à un ajustement serré, le fil a un diamètre cette fois-ci légèrement supérieur à l'épaisseur de l'espace annulaire. L'ensemble de restriction plus fil est donc ajusté dans le tube de circulation (à titre d'exemple, la mise en place peut se faire en usine par un jeu sur les dilatations thermiques). La chaleur est donc conduite directement par conduction jusqu'au MCP.

Selon un second mode de réalisation, le nombre de tours de fil et son épaisseur sont optimisés pour permettre un développement de la surface d'échange suffisant pour permettre la conduction de la chaleur à travers l'eau quasi-stagnante jusqu'au MCP.

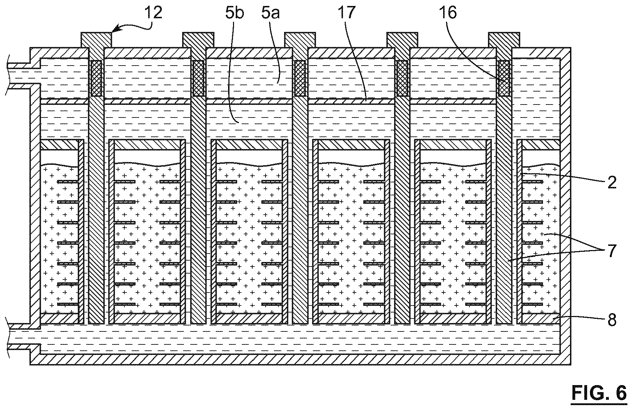

Un autre mode de réalisation de l'invention va maintenant être décrit en référence aux figures 6 à 8.

Selon ce mode de réalisation, les éléments de restriction de section sont creux. Ils délimitent de préférence un volume interne 15 fermé au moins à leur extrémité inférieure. Ainsi, ces éléments de restriction présentent des formes en « doigts de gant ».

Avantageusement, le volume interne creux est rempli, au moins en partie, par un MCP additionnel 19. Ainsi l'élément de restriction présente une forme de canne creuse.

Dans ce mode de réalisation, l'élément de restriction forme ainsi un élément chauffant comportant un tube à l'intérieur duquel est inséré le MCP additionnel 19. Ce MCP additionnel 19 étant au contact indirect ou direct avec un organe chauffant tel qu'une cartouche chauffante 16 porté par l'élément de restriction de section. De préférence l'organe chauffant est logé à l'intérieur de l'élément de restriction.

Dans l'exemple illustré, l'organe chauffant telle qu'une cartouche chauffante 16 n'est pas au contact direct du MCP additionnel 19. Elle est confinée dans un compartiment de l'élément de restriction de section. Néanmoins, ce dernier présente une charge thermique efficace par conduction entre la cartouche chauffante 16 et le MCP additionnel 19. Une simple paroi métallique fait l'interface entre la cartouche chauffante 16 et le MCP additionnel 19.

Dans une construction privilégiée, les restrictions de section creuses sont remplies de MCP 19 sauf au niveau du distributeur 5, où est alors insérée la cartouche chauffante 16. Cette construction permet d'augmenter la quantité de MCP présente dans le stockage et améliore ainsi la densité énergétique. De plus, le fluide caloporteur échange maintenant vers l'extérieur et l'intérieur de l'espace annulaire 20, la surface d'échange est ainsi presque doublée.

Selon une caractéristique avantageuse de l'invention, une chicane 17 a été ajoutée au niveau du distributeur 5, coupant ce dernier en deux parties ce qui oblige le fluide caloporteur à accélérer au niveau des cartouches, augmentant la densité de chaleur au niveau des cartouches 16.

On entend par chicane tout dispositif permettant de diviser le distributeur en deux ou plus parties, tout en laissant au moins un passage pour que le fluide caloporteur puisse passer d'une partie à l'autre. La densité de chaleur à transférer au niveau des cartouches 16 est plus élevée que celle à transférer lors de l'utilisation des éléments chauffants. La chicane coupe le distributeur 5 en deux parties qui ne présentent pas nécessairement le même volume.

Sur l'exemple illustré, la chicane est disposée de manière horizontale, c'est-à-dire perpendiculaire aux tubes 2.

Selon un mode de réalisation, le fluide caloporteur pénètre alors au sein de l'enceinte 10 par la canalisation d'entrée 14a. Le fluide passe dans un premier temps dans la préchambre de chauffage 5a ; les cartouches 16 vont alors fournir de la chaleur au fluide caloporteur par échange thermique.

En outre, les cartouches chauffantes 16 réchauffent le MCP additionnel 19 présent au sein des éléments de restriction de section et modifient ainsi la phase de ce MCP 19.

Cet échange est favorisé par la présence d'ailettes 18 sur le haut des restrictions de section creuses. Le fluide caloporteur passe dans un second temps dans la chambre de distribution 5b. Le fluide est ensuite distribué à l'intérieur des tubes 2 dans le passage annulaire 20.

Le fluide caloporteur, en s'écoulant de ces tubes 2 et le long des éléments de restriction de section transfère de la chaleur à la fois au MCP 7 présent dans le volume de rétention 11 et à la fois dans le MCP additionnel 19 présent au sein des éléments de restriction de section.

Le fluide caloporteur va alors fournir de la chaleur aux MCP 7 et 19 ce qui va permettre leur changement de phase. Cet échange de chaleur est favorisé par la vitesse de passage du fluide caloporteur qui est augmentée par la faible section de passage des tubes 2. Le fluide caloporteur va ensuite sortir des tubes 2 et aller dans le collecteur 6, puis sortir de l'enceinte 10 par l'embouchure de sortie 14b.

L'invention concerne également un procédé de stockage d'énergie.

Le procédé de stockage comprend plusieurs phases :

- une phase a) de stockage d'énergie électrique et/ou thermique, également appelée charge. Au cours de cette phase, l'élément chauffant électrique (barreaux chauffants 9 ou cartouche 16) peut fonctionner et l'électricité est transformée en chaleur récupérée par le fluide caloporteur. La chaleur est ensuite transmise au MCP 7 qui va récupérer la chaleur thermique issue des résistances électriques et l'énergie thermique issue du fluide caloporteur.
- une phase b) de déstockage de l'énergie, également appelée décharge. Au cours de cette phase, le fluide caloporteur récupère la chaleur stockée dans le MCP 7. Le fluide caloporteur est plus froid que le MCP 7 qui transmet alors l'énergie thermique au fluide caloporteur.

Ce mode de fonctionnement permet de valoriser une énergie électrique disponible. Il peut aussi permettre d'assurer une livraison de chaleur dans une sous-station, même si le réseau de chaleur est indisponible du fait d'une maintenance ou d'un accident. Ce type de fonctionnement est également assimilable à l'ajout d'une « centrale électrique » sur le réseau de chaleur : en effet, dans le cas où toutes les centrales thermiques sont au maximum de leur puissance mais ne parviennent pas à assurer la demande, la mise en fonctionnement des différents moyens de charge électrique permet d'ajouter une source de chaleur sur le réseau.

*Exemple : Mise en place d'un dispositif de stockage selon l'invention sur un réseau de chaleur urbain.*

Un dispositif de stockage selon l'invention comprend un MCP 7, des tubes 2 à ailettes 2a et une enceinte 10, des barreaux chauffants sont placés à l'intérieur des tubes 2 et sortent de l'enceinte 10 pour être alimentés électriquement depuis l'extérieur de l'enceinte 10.

Pour un système de stockage par enthalpie à changement de phase de type tubes à ailettes et calandre, il faut compter que le volume intérieur est occupé à environ un quart ou un tiers par les tubes 2 à ailettes 2a. Les tubes 2 sont en acier de diamètres intérieur et extérieur de 20 mm et 25.4 mm respectivement. Les ailettes 2a en aluminium de pas 2.54 mm, d'épaisseur moyenne 0.4 mm et de diamètre extérieur 57.4 mm. En prenant en compte l'isolation de l'enceinte 10 et le revêtement extérieur, alors le MCP 7 ne représente qu'un peu plus de la moitié de l'espace total occupé par le dispositif de stockage.

On considère une soixantaine de logements, le réseau de chaleur, circuit primaire, est parcouru par de l'eau chaude surchauffée jusqu'à 105°C à 4 bar. Soit un stockage de 1,5 $MWh_{th}$, se déchargeant en 2 heures, correspondant à la durée moyenne du pic d'appel de puissance du matin dû notamment à l'utilisation d'eau chaude sanitaire sur un réseau de chaleur.

Soit une sous-station moyenne :

- 60 logements desservis
- 720 $MWh_{th}$ fournis sur l'année
- Saison de chauffe de 150 jours (en basse saison, seules les sous-stations assurant le chauffage de l'eau chaude sanitaire sont en service ; globalement le réseau fonctionne à moins de 10% de sa capacité totale)
- Sous-stations alimentées en eau surchauffée jusqu'à 105°C, 4bar

MW signifie Mégawatt ; MWh signifie Mégawatt heure ; MWh thermique signifie Mégawatt heure de source thermique ou d'énergie thermique déchargée ; MWh électrique signifie Mégawatt heure d'origine électrique.

Considérons donc une consommation approximative de 5$MWh_{thermique}$/jr, dont 1.5$MWh_{thermique}$ sont consommés pendant les pics de consommation : c'est l'énergie à stocker dans le MCP 7. La charge doit se faire sur environ 2h, soit une puissance désirée de 750 $kW_{thermique}$.

Le MCP 6 sélectionné est le xylitol :

- température de fusion : 93°C ;
- enthalpie massique de fusion : 240 kJ/kg ;
- capacité thermique massique à pression constante :

2000 J.kg⁻¹.K⁻¹ ;
- densité solide : 1400 kg/m³ ;
- densité liquide : 1200 kg/m³ ;

Les dimensions totales d'un tel stockage sont de 2.5 m de diamètre et de 4.0 m de haut pour l'enceinte soit 3.1 m et 4.3 m isolation comprise. Il y a environ 1000 tubes 2 de diamètre extérieur de 55 mm en comptant les ailettes et de 25 mm sans compter les ailettes. Le diamètre intérieur des tubes est de 20 mm. Les barreaux chauffants vont jusqu'à 4 m de long pour 16 mm de diamètre et fournissent environ 750 W ou plus. Ceci correspondrait à une puissance totale de 750 kW, puissance environ égale à la puissance thermique du stockage. Les barreaux sont insérés par le haut du réservoir, ils sont soit vissés dans le réservoir, soit raccordés via une bride.

L'espace annulaire 20 ainsi obtenu de multiplier la vitesse de passage de l'eau par trois et de diminuer le diamètre hydraulique d'un facteur 5. Si l'on prend un écart de température d'une vingtaine de degrés entre l'entrée (70°C) et la sortie (90°C) du fluide caloporteur lors de la décharge, on obtient pour une puissance de 750 kW, un débit de 8,9 kg.s-1, soit une vitesse de passage dans les tubes qui passe de 2,9 à 8,1 cm.s⁻¹. Le coefficient d'échange laminaire passe de 160 W/(m²K) à 650 W/(m²K), soit un gain en efficacité de transfert thermique convectif d'environ 300 %.

Au vu de la description qui précède, il apparaît clairement que l'invention offre une solution efficace pour stocker et déstocker de l'énergie à partir d'une charge thermique et/ou électrique et ceci tout en limitant ou en supprimant les inconvénients des solutions connues.

L'invention n'est pas limitée aux modes de réalisation décrits ci-dessus, mais s'étend à tous les modes de réalisation entrant dans la portée des revendications.

En particulier, l'élément chauffant peut revêtir différentes formes et ne doit pas être limité aux barreaux chauffants.

REFERENCES

1.    Dispositif de stockage
2.    Tubes
2a.   Ailettes
3.    Fluide caloporteur
4.    Zone de circulation
5.    Distributeur
5a.   Préchambre de chauffage
5b.   Chambre de distribution
6.    Collecteur
7.    MCP
8.    Plaque collectrice
9.    Barreaux chauffants
10.   Enceinte
11.   Volume de rétention
12.   Bouchons vissés
13.   Fil
14.   Canalisations
14a.  Première embouchure du fluide caloporteur
14b.  Deuxième embouchure du fluide caloporteur
15.   Restriction de section creuse
16.   Cartouche
17.   Chicane
18.   Ailettes de l'élément de restriction
19.   MCP additionnel
20.   Espace annulaire

**Revendications**

1.  Dispositif de stockage d'énergie thermique par matériau à changement de phase (MCP) comprenant une enceinte (10) de stockage comprenant :

    - un volume de rétention (11) comprenant au moins un MCP (7),
    - des zones de circulation (4) traversant le MCP (7) et destinées à contenir un fluide caloporteur pour le faire circuler dans le volume de rétention (11) comprenant le MCP (7),

    **caractérisé en ce qu'**il comprend des éléments de restriction (9, 15) de section agencés au moins partiellement à l'intérieur d'au moins certaines zones de circulation (4) du fluide caloporteur (3) de sorte à réduire la section de passage du fluide caloporteur (3) dans au moins une partie des zones de circulation (4), au moins un élément de restriction (9,15) de section comprenant au moins un élément chauffant (9, 16) alimenté en électricité et configuré pour chauffer au moins en partie l'élément de restriction de section (9,15).

2.  Dispositif selon la revendication précédente dans lequel le ratio entre la section de l'élément de restriction (9,15) et la section des zones de circulation (4) est supérieur à 20 %, éventuellement supérieur à 50%, voire supérieur à 75%, et de préférence compris entre 50% et 90%.

3.  Dispositif selon l'une quelconque des revendications précédentes dans lequel l'enceinte (10) comprend une région (5) de distribution du fluide caloporteur (3) vers les zones de circulation (4) et une région de collecte (6) du fluide caloporteur (3) provenant des zones de circulation (4), la région de distribution (5) et la région de collecte (6) étant agencées de manière opposées de part et d'autre des zones de circulation (4) du fluide caloporteur (3).

4.  Dispositif selon l'une quelconque des revendications précédentes dans lequel au moins un élément de restriction (15) est creux, dans lequel au moins un MCP additionnel (19) est disposé dans le creux dudit élément de restriction (15) et dans lequel l'élément chauffant (16) est disposé dans le creux de l'élément de restriction (15) et au contact du MCP additionnel (19).

5. Dispositif selon la revendication précédente dans lequel ledit élément chauffant (16) est une cartouche chauffante.

6. Dispositif selon l'une quelconque des deux revendications précédentes prise dans sa combinaison avec la revendication 5, dans lequel la région de distribution (5) comprend une réduction de section du passage du fluide caloporteur (3) au niveau de l'élément chauffant (16), tel qu'une chicane (17).

7. Dispositif selon l'une quelconque des revendications précédentes, dans lequel l'élément de restriction (15) s'étend principalement selon une direction longitudinale, et dans lequel l'élément chauffant (9) s'étend sur une portion seulement de la dimension longitudinale de l'élément de restriction (15) située au regard du MCP (7).

8. Dispositif selon l'une quelconque des revendications 1 à 6, dans lequel l'élément de restriction (15) s'étend principalement selon une direction longitudinale, et dans lequel l'élément chauffant (9) s'étend sur toute la dimension longitudinale de l'élément de restriction (15) située au regard du MCP (7).

9. Dispositif selon l'une quelconque des revendications 1 à 3 et 7 à 8, dans lequel l'élément de restriction (15) comprend un barreau (9) chauffant.

10. Dispositif selon l'une quelconque des revendications précédentes dans lequel tous les éléments de restriction (15) de section comprennent un élément chauffant (9,12).

11. Dispositif selon l'une quelconque des revendications précédentes dans lequel les zones de circulation du fluide caloporteur (3) comprennent des tubes (2) creux permettant le passage du fluide caloporteur (3).

12. Dispositif selon l'une quelconque des revendications précédentes comprenant au moins un élément intermédiaire situé entre une face interne d'au moins une zone de circulation (4) du fluide caloporteur (3) et une face externe de l'élément de restriction (9, 15) de section et dans lequel l'élément intermédiaire est conformé pour réaliser un centrage de l'élément de restriction (9, 15) de section à l'intérieur de la zone de circulation (4) et/ou pour augmenter l'échange de chaleur par convection lors de l'écoulement de ce dernier entre la face externe de la zone de circulation (4) du fluide et la face externe de l'élément de restriction (9, 15) de section et /ou pour guider le fluide caloporteur lors de l'écoulement de ce dernier entre la face interne de la zone de circulation (4) du fluide et la face externe de l'élément de restriction (9, 15) de section.

13. Dispositif selon la revendication précédente dans lequel l'élément intermédiaire est porté ou formé par la face externe de l'élément de restriction (9, 15) de section.

14. Dispositif selon l'une quelconque des deux revendications précédentes dans lequel l'élément intermédiaire présente une forme hélicoïdale, notamment formé par un fil (13) enroulé autour de la face externe de l'élément de restriction (9, 15) de section, ou un filetage réalisé dans la face externe de l'élément de restriction (9, 15) de section, ou d'une pluralité de disques ajourés s'étendant selon une direction sensiblement perpendiculaire à la direction principale selon laquelle l'élément de restriction (9, 15) s'étend.

15. Procédé de stockage et de déstockage d'énergie thermique par un dispositif selon l'une quelconque des revendications précédentes **caractérisé en ce qu'**il comprend :

a. une phase de stockage d'énergie électrique dans laquelle l'élément chauffant et/ou le fluide caloporteur transmettent de la chaleur au MCP (7) qui stocke l'énergie thermique en changeant d'état,
b. une phase de déstockage d'énergie thermique dans laquelle le fluide caloporteur (3) refroidit le MCP (7) qui change d'état pour libérer de l'énergie thermique qui est alors récupérée par le fluide caloporteur (3).

**Patentansprüche**

1. Vorrichtung zur Speicherung von Wärmeenergie durch ein Phasenwechselmaterial (PCM), umfassend einen Speicherbehälter (10), der umfasst:

- ein Retentionsvolumen (11), das mindestens ein PCM (7) umfasst;
- Zirkulationszonen (4), die das PCM (7) durchqueren und dazu vorgesehen sind, ein Wärmeträgerfluid zu enthalten, um dasselbe in dem das PCM (7) umfassenden Retentionsvolumen (11) zirkulieren zu lassen,

**dadurch gekennzeichnet, dass** sie Querschnittsbegrenzungselemente (9, 15) umfasst, die mindestens teilweise im Inneren von mindestens gewissen Zirkulationszonen (4) des Wärmeträgerfluids (3) eingerichtet sind, um den Durchgangsquerschnitt des Wärmeträgerfluids (3) in mindestens einem Teil der Zirkulationszonen (4) zu reduzieren, wobei mindestens ein Querschnittbegrenzungselement (9, 15) mindestens ein Heizelement (9, 16) umfasst, das mit Strom gespeist wird und dafür ausgebildet ist, das Querschnittsbegrenzungselement (9, 15) mindestens zum Teil zu erhitzen.

2. Vorrichtung nach dem vorstehenden Anspruch, wobei das Verhältnis zwischen dem Querschnitt des Begrenzungselements (9, 15) und dem Querschnitt der Zirkulationszonen (4) größer als 20 %, gegebenenfalls größer als 50 %, ja sogar größer als 75 % ist, und vorzugsweise im Bereich zwischen 50 % und 90 % beträgt.

3. Vorrichtung nach einem der vorstehenden Ansprüche, wobei der Behälter (10) eine Region (5) zum Verteilen des Wärmeträgerfluids (3) zu den Zirkulationszonen (4), und eine Region zum Sammeln (6) des von den Zirkulationszonen (4) kommenden Wärmeträgerfluids (3) umfasst, wobei die Verteilregion (5) und die Sammelregion (6) in gegenüberliegender Weise auf beiden Seiten der Zirkulationszonen (4) des Wärmeträgerfluids (3) eingerichtet sind.

4. Vorrichtung nach einem der vorstehenden Ansprüche, wobei mindestens ein Begrenzungselement (15) hohl ist, wobei mindestens ein zusätzliches PCM (19) in der Höhlung des Begrenzungselements (15) angeordnet ist, und wobei das Heizelement (16) in der Höhlung des Begrenzungselements (15) und in Kontakt mit dem zusätzlichen PCM (19) angeordnet ist.

5. Vorrichtung nach dem vorstehenden Anspruch, wobei das Heizelement (16) eine Heizpatrone ist.

6. Vorrichtung nach einem der zwei vorstehenden Ansprüche in Kombination mit Anspruch 5, wobei die Verteilregion (5) eine Querschnittsreduzierung des Durchgangs des Wärmeträgerfluids (3) im Bereich des Heizelements (16), wie etwa eine Schikane (17) umfasst.

7. Vorrichtung nach einem der vorstehenden Ansprüche, wobei sich das Begrenzungselement (15) hauptsächlich entlang einer Längsrichtung erstreckt, und wobei sich das Heizelement (9) auf nur einem Teilstück der Längsabmessung des Begrenzungselements (15) erstreckt, das dem PCM (7) zugewandt liegt.

8. Vorrichtung nach einem der Ansprüche 1 bis 6, wobei sich das Begrenzungselement (15) hauptsächlich entlang einer Längsrichtung erstreckt, und wobei sich das Heizelement (9) über die gesamte Längsabmessung des Begrenzungselements (15) erstreckt, die dem PCM (7) zugewandt liegt.

9. Vorrichtung nach einem der Ansprüche 1 bis 3 und 7 bis 8, wobei das Begrenzungselement (15) einen Heizstab (9) umfasst.

10. Vorrichtung nach einem der vorstehenden Ansprüche, wobei alle der Querschnittsbegrenzungselemente (15) ein Heizelement (9, 12) umfassen.

11. Vorrichtung nach einem der vorstehenden Ansprüche, wobei die Zirkulationszonen des Wärmeträgerfluids (3) Hohlrohre (2) umfassen, die den Durchgang des Wärmeträgerfluids (3) ermöglichen.

12. Vorrichtung nach einem der vorstehenden Ansprüche, die mindestens ein Zwischenelement umfasst, das zwischen einer Innenfläche von mindestens einer Zirkulationszone (4) des Wärmeträgerfluids (3) und einer Außenfläche des Querschnittsbegrenzungselements (9, 15) liegt, und wobei das Zwischenelement dafür ausgestaltet ist, eine Zentrierung des Querschnittsbegrenzungselements (9, 15) im Inneren der Zirkulationszone (4) auszuführen, und/oder dafür, den Wärmeaustausch durch Konvektion beim Strömen dieses letzteren zwischen der Außenfläche der Zirkulationszone (4) des Fluids und der Außenfläche des Querschnittsbegrenzungselements (9, 15) zu erhöhen, und/oder dafür, das Wärmeträgerfluid beim Strömen dieses letzteren zwischen der Innenfläche der Zirkulationszone (4) des Fluids und der Außenfläche des Querschnittsbegrenzungselements (9, 15) zu lenken.

13. Vorrichtung nach dem vorstehenden Anspruch, wobei das Zwischenelement von der Außenfläche des Querschnittsbegrenzungselements (9, 15) getragen oder gebildet wird.

14. Vorrichtung nach einem der zwei vorstehenden Ansprüche, wobei das Zwischenelement eine schraubenförmige Form aufweist, die insbesondere von einem Draht (13) gebildet wird, der um die Außenfläche des Querschnittsbegrenzungselements (9, 15) herum gewickelt ist, oder ein Gewinde, das in der Außenfläche des Querschnittsbegrenzungselements (9, 15) ausgeführt ist, oder eine Vielzahl von durchbrochenen Scheiben, die sich entlang einer im Wesentlichen senkrechten Richtung zur Hauptrichtung erstrecken, entlang der sich das Begrenzungselement (9, 15) erstreckt.

15. Verfahren zum Speichern und zum Abziehen von Wärmeenergie durch eine Vorrichtung nach einem der vorstehenden Ansprüche, **dadurch gekennzeichnet, dass** es umfasst:

    a. eine Phase des Speicherns von elektrischer Energie, in der das Heizelement und/oder das Wärmeträgerfluid Wärme auf das PCM (7) übertragen, das die Wärmeenergie unter Wechsel des Zustands speichert,

b. eine Phase des Abziehens von Wärmeenergie, in der das Wärmeträgerfluid (3) das PCM (7) kühlt, das den Zustand wechselt, um Wärmeenergie freizusetzen, die anschließend vom Wärmeträgerfluid (3) aufgenommen wird.

**Claims**

1. Device for storing heat energy by phase change material (PCM) comprising a storage chamber (10) comprising:

   - a retention volume (11) comprising at least one PCM (7),
   - circulation zones (4) passing through the PCM (7) and intended to contain a heat-transfer fluid to make it circulate in the retention volume (11) comprising the PCM (7),

   **characterised in that** it comprises cross-sectional restriction elements (9, 15) arranged at least partially inside at least some zones for circulating (4) the heat-transfer fluid (3) so as to reduce the cross-section for the passage of the heat-transfer fluid (3) in at least one part of the circulation zones (4), at least one cross-sectional restriction element (9, 15) comprising at least one heating element (9, 16) supplied with electricity and configured to heat at least partially the cross-sectional restriction element (9, 15).

2. Device according to the preceding claim, wherein the ratio between the cross-section of the restriction element (9, 15) and the cross-section of the circulation zones (4) is greater than 20%, possibly greater than 50%, even greater than 75%, and preferably between 50% and 90%.

3. Device according to any one of the preceding claims, wherein the chamber (10) comprises a region (5) for distributing the heat-transfer fluid (3) towards the circulation zones (4) and a region for collecting (6) the heat-transfer fluid (3) coming from the circulation zones (4), the distribution region (5) and the collection zone (6) being arranged opposite one another, on either side of the circulation zones for circulating (4) the heat-transfer fluid (3).

4. Device according to any one of the preceding claims, wherein at least one restriction element (15) is hollow, wherein at least one additional PCM (19) is disposed in the cavity of said restriction element (15) and wherein the heating element (16) is disposed in the cavity of the restriction element (15) and in contact with the additional PCM (19).

5. Device according to the preceding claim, wherein said heating element (16) is a heating cartridge.

6. Device according to any one of the two preceding claims, taken combined with claim 5, wherein the distribution region (5) comprises a reduction of cross-section of the passage of the heat-transfer fluid (3) at the level of the heating element (16), such as a chicane (17).

7. Device according to any one of the preceding claims, wherein the restriction element (15) extends mainly along a longitudinal direction, and wherein the heating element (9) extends over one portion only of the longitudinal dimension of the restriction element (15) situated opposite the PCM (7).

8. Device according to any one of claims 1 to 6, wherein the restriction element (15) extends mainly along a longitudinal direction, and wherein the heating element (9) extends over the whole longitudinal dimension of the restriction element (15) situated opposite the PCM (7).

9. Device according to any one of claims 1 to 3 and 7 to 8, wherein the restriction element (15) comprises a heating bar (9).

10. Device according to any one of the preceding claims, wherein all the cross-sectional restriction elements (15) comprise a heating element (9, 12).

11. Device according to any one of the preceding claims, wherein the zones for circulating the heat-transfer fluid (3) comprise hollow tubes (2) enabling the passage of the heat-transfer fluid (3).

12. Device according to any one of the preceding claims, comprising at least one intermediate element situated between an inner face of at least one zone for circulating (4) the heat-transfer fluid (3) and an outer face of the cross-sectional restriction element (9, 15) and wherein the intermediate element is shaped to achieve a centring of the cross-section restriction element (9, 15) inside the circulation zone (4) and/or to increase the heat exchange by convection during the flowing of the latter between the outer face of the zone for circulating (4) the fluid and the outer face of the cross-sectional restriction element (9, 15) and/or to guide the heat-transfer fluid during the flowing of the latter between the inner face of the zone for circulating (4) the fluid and the outer face of the cross-sectional restriction element (9, 15).

13. Device according to the preceding claim, wherein the intermediate element is carried or formed by the outer face of the cross-sectional restriction element (9, 15).

14. Device according to any one of the two preceding claims, wherein the intermediate element has a helicoidal shape, in particular formed by a wire (13) wound around the outer face of the cross-sectional restriction element (9, 15), or a thread made in the outer face of the cross-sectional restriction element (9, 15), or a plurality of perforated discs extending along a direction, substantially perpendicular to the main direction along which the restriction element (9, 15) extends.

15. Method for storing and releasing heat energy through a device according to any one of the preceding claims, **characterised in that** it comprises:

> a. a phase of storing heat energy, wherein the heating element and/or the heat-transfer fluid transmit heat to the PCM (7) which stores heat energy by changing state,
> b. a phase of releasing heat energy, wherein the heat-transfer fluid (3) cools the PCM (7) which changes state to release heat energy, which is thus recovered by the heat-transfer fluid (3).

FIG. 1

FIG. 2

COUPE B-B    FIG. 3

FIG. 4

FIG. 5b

FIG. 5a

FIG. 6

**FIG. 7**

**FIG. 8**

**EP 3 214 398 B1**

## RÉFÉRENCES CITÉES DANS LA DESCRIPTION

**Documents brevets cités dans la description**

- US 20110083459 A